# EUROPEAN PATENT SPECIFICATION

(11) **EP 1 084 554 B1**
(45) Date of publication and mention of the grant of the patent: **01.08.2007**
(21) Application number: 99929367.3
(22) Date of filing: 04.06.1999
(51) Int. Cl.: H04L 27/32

(54) **PROCEDURE AND DEVICE FOR TRANSMITTING INFORMATION BY RADIO**
PROZEDUR SOWIE EINRICHTUNG ZUR RUNDFUNKÜBERTRAGUNG VON INFORMATIONEN
PROCEDE ET DISPOSITIF DE TRANSMISSION D'INFORMATIONS PAR RADIO

(30) Priority: 05.06.1998 FI 981294
(43) Date of publication of application: 21.03.2001
(73) Proprietor: TeliaSonera Finland Oyj, 00510 Helsinki (FI)
(72) Inventor: LUOMA, Ari-Matti, FIN-23800 Laitila (FI)
(74) Representative: Simmelvuo, Markku Kalevi
(86) International application number: PCT/FI1999/000487
(87) International publication number: WO 1999/065200

(56) References cited:
- US-A- 4 511 864
- US-A- 4 852 086

## Description

### FIELD OF THE INVENTION

The present invention relates to a procedure as defined in the preamble of claim 1 and to a transmitter unit as defined in the preamble of claim 7 for transmitting one carrier channel, a first side band and a second side band in a radio system.

### BACKGROUND OF THE INVENTION

Electronic location and tracking refers to systems which can be used to locate and, if necessary, to follow a desired object as it moves, with a desired accuracy and in desired geographic extent by using radio technical methods. An application in which location service is a desired property is the national safety service network called SafeNet. The principal functions of SafeNet are transfer and routing of supervision information, adaptation of different safety systems and networks for integrated utilisation and establishment of a simple user interface to provide access to different telecommunication services needed in the safety sector. SafeNet has been designed to provide standard interfaces for the commonest object-under-surveillance systems and to combine in the same service network the telecommunication services needed by the operative functional units. The radio communication must be encrypted and it must be able to provide a sufficient data transmission capacity for SafeNet properties.

As one prior art solution, US-A-4852086 discloses a system, which is able to transmit voice signals as an amplitude modulated (AM) single sideband (SSB) signal and additionally, control data as a frequency modulated (FM) signal in another channel. An automatic frequency controller (AFC) first locks to the carrier of the control data channel and thus, the control data is demodulated. The receiver achieves the frequency of the voice signal channel from the demodulated control data. After this, the AFC is able to lock to the carrier of the voice signal channel and thus, transmitted voice messages can be received.

As another prior art solution, US-A-4511864 discloses a modulator, where a signal can be transmitted in only one sideband and where also time-domain peaks of the signal can be limited in order to achieve better signal to noise ratio (SNR) together with keeping the amount of needed filters relatively low. At first, a carrier signal is modulated and the achieved double sideband (DSB) modulated signal is directed into a first filter. The first filter output includes only the lower sideband, which is further directed to a SSB peak-limiter. The output of the peak-limiter includes also multiple frequency components of its input signal and the output is further directed to another modulator, whose carrier frequency is two times the frequency of the previously mentioned carrier. The output of the second modulator is filtered in a way that only an upper sideband (which corresponds the previously mentioned lower sideband) signal is maintained and thus being the transmittable output signal. By switching the order of the two filters the device is able to create correspondingly the transmit signal located in another sideband.

### BRIEF DESCRIPTION OF THE INVENTION

The object of the present invention is to make it possible to achieve the above-mentioned properties. A specific object of the invention is to disclose a new type of procedure for transmitting information by radio and a new type of apparatus for implementing the transmission of information.

As for the features characteristic of the present invention, reference is made to the claims.

The procedure of the invention concerns the transmission of information on a carrier channel, a first side band and a second side band in a radio system. The radio system comprises a channel transmitter unit and a channel receiver unit, which have been fitted to function at a plurality of radio frequencies. In the procedure of the invention, the width of the carrier channel frequency band is defined and the widths of the side bands are so defined that they are equal to or smaller than the width of the carrier channel frequency band. A frequency-modulated (FM) signal is transmitted on the carrier channel, in which the frequency-modulated signal is created from a suitable carrier frequency modulated by carrier channel information. An amplitude-modulated (AM) signal using the carrier frequency and a suitable clock frequency is generated, in order to obtain an amplitude-modulated signal symmetric with respect to the carrier frequency of the carrier channel, thereby forming an upper single side band, a carrier wave and a lower single side band. In other words, the frequency of the carrier wave of the amplitude-modulated signal is the same as the carrier frequency of the carrier channel.

A first amplitude-modulated single side band is formed from the amplitude-modulated signal by suppressing the carrier wave and the upper single side band by taking a first sample of the sum formed by the carrier wave and the upper single side band and reversing the phase of the first sample and summing it with the original amplitude-modulated signal. A second amplitude-modulated single side band is formed from the amplitude-modulated signal in a corresponding manner, by suppressing the carrier wave and the lower single side band by taking a second sample of the sum formed by the carrier wave and the lower single side band and reversing the phase of the second sample and summing it with the original amplitude-modulated signal.

The first single side band is modulated by first side band information, thus forming two side bands for the first single side band. The second single side band is modulated by second side band information, thus forming two side bands for the second single side band. The frequency-modulated signal, the first single side band and the second single side band are combined in a combiner so that all three channels are transmitted simultaneously.

In a preferred embodiment of the invention, the first and the second single side bands are transmitted in-phase with each other. The carrier channel is transmitted in reversed phase relative to the single side bands.

In a preferred embodiment of the invention, an analogue signal is transmitted in the carrier channel and a digital signal is transmitted in the side band.

In a preferred embodiment of the invention, the carrier wave used on reception is either the frequency-modulated signal, the first single side band or the second single side band.

In a preferred embodiment of the invention, a key code for the carrier channel is transmitted on a single side band, said key code allowing an encrypted message to be decrypted.

Moreover, the invention relates to a transmitter unit for the transmission of information on a carrier channel, a first side band and a second side band in a radio system. The radio system comprises a channel transmitter unit and a channel receiver unit, which have been fitted to function at a plurality of radio frequencies. The transmitter unit comprises means for generating a suitable carrier frequency and means for modulating the suitable carrier frequency by carrier channel information into a frequency-modulated signal. The transmitter unit also comprises means for generating an amplitude-modulated signal using the carrier frequency and a suitable clock frequency in order to obtain an amplitude-modulated signal symmetric with respect to the carrier frequency of the carrier channel. Thus, the carrier waves of the amplitude-modulated and frequency-modulated signals are at the same frequency. The transmitter unit comprises means for forming a first amplitude-modulated single side band from the amplitude-modulated signal by suppressing the carrier wave and the upper single side band by taking a first sample of the sum formed by the carrier wave and the upper single side band and reversing the phase of the first sample and summing it with the original amplitude-modulated signal and means for forming a second amplitude-modulated single side band from the amplitude-modulated signal by suppressing the carrier wave and the lower single side band by taking a second sample of the sum formed by the carrier wave and the lower single side band and reversing the phase of the second sample and summing it with the original amplitude-modulated signal, means for modulating the first single side band by first side band information, means for modulating the second single side band by second side band information, and means for combining the first single side band, the second single side band and the frequency-modulated signal and transmitting them simultaneously.

In a preferred embodiment of the invention, the transmitter unit comprises means for phasing the first and the second single side bands so as to make them cophasal. The transmitter unit preferably comprises means for phasing the carrier wave so as to make it reversed in phase with respect to the single side bands.

The invention provides the advantage of achieving three information channels combined in a single signal, thereby obviating interference between signals. The invention can be used to implement an encryption function especially as needed in SafeNet applications, the side channels being modulated by the encryption keys. The invention is easy to implement using existing components, and the actions required in the procedure are relatively simple.

### DETAILED DESCRIPTION OF THE INVENTION

In the following, the invention will be described by the aid of a few examples of its embodiments with reference to the attached drawing, which presents a diagram representing an embodiment of the invention.

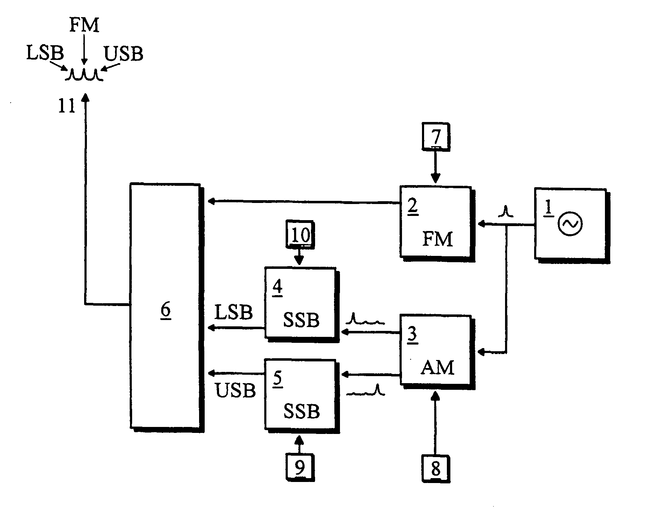

Fig. 1 is a diagrammatic representation of the operation of a transmitter unit as provided by the invention. The transmitter unit comprises an oscillator 1, which generates a suitable carrier frequency for a frequency modulator 2 and a single side band generator 3. The carrier is modulated in the frequency modulator 2 by the carrier channel information 7 to produce a frequency-modulated signal (FM, Frequency Modulation).

The single side band generator 3 comprises an amplitude modulator which produces an amplitude-modulated signal from the carrier frequency and a suitable clock frequency 8. The amplitude-modulated signal thus produced is in the frequency domain symmetrical with respect to the carrier frequency. From the amplitude-modulated signal, two separate single side bands are formed. A single side band (SSB) is formed by suppressing the carrier wave and the second side band. The suppression is implemented by reversing the phase of a sample taken from the signal and summing it with the original signal, with the result that they cancel each other. The first single side band LSB (Lower Side Band) separated from the amplitude-modulated signal is taken to a modulator 4 and the second single side band USB (Upper Side Band) is taken to a modulator 5.

The first single side band LSB is modulated by the information 10 in the first side channel in the modulator 4 and the second single side band USB is modulated by the information 9 in the second side channel in the modulator 5. When the single side band is modulated by the side channel information, two side bands are formed for the single side band.

The carrier channel FM, the first single side band LSB and the second single side band USB are taken to a combiner 6. The combiner 6 phases the three signals in an appropriate manner and removes any extra modulation results so that the three signals can be transmitted simultaneously. The characteristics of the combiner 6 include a large attenuation between all three input ports, a small attenuation out from the input ports and a large return loss for all input ports.

The combiner 6 phases the two single side bands USB, LSB so that they are in-phase with each other and in reversed phase relative to the frequency-modulated signal FM. The signal 11 to be sent to the preamplifier and antenna thus consists of the frequency-modulated signal FM transmitted in the centre and the first single side band LSB and the second single side band USB, transmitted at similar distances from it in the frequency domain.

For reception, any one of the three signals can be used as a carrier wave. As the difference between the signal frequencies is known, one signal can be used as a basis for determining the frequencies of the other two signals. The invention is applicable for use in several frequency ranges.

The signals are preferably transmitted in a 25 Hz frequency band divided into five 5 Hz bands. In this case, the order of the frequency bands from a lower frequency to a higher frequency is as follows: 5 Hz buffer band for adjacent band interference, first single side band LSB, frequency-modulated carrier channel, second single side band USB and second 5 Hz buffer band for adjacent band interference.

The apparatus of the invention can be implemented e.g. using standard Gilbert Cells. These can be connected as an oscillator, mixer, summer, separator or amplifier. The circuit to be used preferably contains integrated components for the phasing functions, e.g. capacitive or inductive components. In the implementation of the invention, it is necessary to consider the slight inaccuracy resulting from component tolerances, which, however, can be eliminated via calibration.

The invention is not restricted to the examples of its embodiments described above, but many variations are possible within the scope of the inventive idea defined in the claims.

## Claims

1. Procedure for transmitting information on a carrier channel, a first single side band and a second single side band in a radio system, said radio system comprising a channel transmitter unit and a channel receiver unit, which have been fitted to function at a plurality of radio frequencies, **characterised in that**
- defining the width of the carrier channel frequency band,
- defining the widths of the side bands to be equal to or smaller than the width of the carrier channel frequency band,
- transmitting on the carrier channel a frequency-modulated signal, which is created from a suitable carrier frequency modulated by carrier channel information,
- generating an amplitude-modulated signal using the carrier frequency and a suitable clock frequency, in order to obtain an amplitude-modulated signal symmetric with respect to the carrier frequency of the carrier channel, thereby forming an upper single side band, a carrier wave and a lower single side band,
- forming a first amplitude-modulated single side band from the amplitude-modulated signal by suppressing the carrier wave and the upper single side band by taking a first sample of the sum formed by the carrier wave and the upper single side band and reversing the phase of the first sample and summing it with the original amplitude-modulated signal,
- forming a second amplitude-modulated single side band from the amplitude-modulated signal by suppressing the carrier wave and the lower single side band by taking a second sample of the sum formed by the carrier wave and the lower single side band and reversing the phase of the second sample and summing it with the original amplitude-modulated signal,
- modulating the first single side band by first side band information, thus forming two side bands for the first single side band,
- modulating the second single side band by second side band information, thus forming two side bands for the second single side band,
- combining the frequency-modulated signal, the first single side band and the second single side band in a combiner so that all three channels are transmitted simultaneously.

2. Procedure as defined in claim 1, **characterised in that** the first and the second single side bands are transmitted in-phase with each other.

3. Procedure as defined in claim 2, **characterised in that** the carrier channel is transmitted in reversed phase relative to the single side bands.

4. Procedure as defined in any one of the preceding claims 1 - 3, **characterised in that** an analogue signal is transmitted in the carrier channel while a digital signal is transmitted in the side band.

5. Procedure as defined in any one of the preceding claims 1 - 4, **characterised in that** the carrier wave used on reception is either the frequency-modulated signal, the first single side band or the second single side band.

6. Procedure as defined in any one of the preceding claims 1 - 5, **characterised in that** a key code for the carrier channel is transmitted on a single side band, said key code allowing an encrypted message to be decrypted.

7. Transmitter unit for transmitting information on a carrier channel, a first single side band and a second single side band in a radio system, said radio system comprising a channel transmitter unit and a channel receiver unit, which have been fitted to function at a plurality of radio frequencies, **characterised in that** the transmitter unit comprises means (1) for generating a suitable carrier frequency, means (2) for modulating the suitable carrier frequency by carrier channel information (7) into a frequency-modulated signal, means (3) for generating an amplitude-modulated signal using the carrier frequency and a suitable clock frequency (8) in order to obtain an amplitude-modulated signal symmetric with respect to the carrier frequency of the carrier channel, means (3) for forming a first amplitude-modulated single side band from the amplitude-modulated signal by suppressing the carrier wave and the upper single side band by taking a first sample of the sum formed by the carrier wave and the upper single side band and reversing the phase of the first sample and summing it with the original amplitude-modulated signal, means (3) for forming a second amplitude-modulated single side band from the amplitude-modulated signal by suppressing the carrier wave and the lower single side band by taking a second sample of the sum formed by the carrier wave and the lower single side band and reversing the phase of the second sample and summing it with the original amplitude-modulated signal, means (4) for modulating the first single side band by first side band information (10), means (5) for modulating the second single side band by second side band information (9), means (6) for combining the first single side band, the second single side band and the frequency-modulated signal and transmitting them simultaneously.

8. Transmitter unit as defined in claim 7, **characterised in that** the transmitter unit comprises means (6) for phasing the first and the second single side bands so as to make them cophasal.

9. Transmitter unit as defined in claim 8, **characterised in that** the transmitter unit comprises means (6) for phasing the carrier wave so as to make it reversed in phase to the single side bands.

## Patentansprüche

1. Verfahren zum Übertragen bzw. Senden von Information auf einem Trägerkanal, einem ersten Einzelseitenband und einem zweiten Einzelseitenband in einem Funksystem bzw. Rundfunksystem, wobei das Funksystem eine Kanalsendeeinheit und eine Kanalempfängereinheit aufweist, welche geeignet gemacht wurden, bei einer Vielzahl von Funkfrequenzen zu funktionieren, **gekennzeichnet durch**:
- Festlegen der Breite des Trägerkanalfrequenzbandes,
- Festlegen der Breiten der Seitenbänder, so dass diese gleich oder kleiner als die Breite des Trägerkanalfrequenzbandes ist,
- Senden eines frequenzmodulierten Signals auf dem Trägerkanal, welches von einer geeigneten Trägerfrequenz erzeugt ist, welche **durch** die Trägerkanalinformation moduliert ist,
- Erzeugen eines in der Amplitude modulierten Signals, wobei die Trägerfrequenz und eine geeignete Taktfrequenz benutzt werden, um ein in der Amplitude moduliertes Signal zu erhalten, welches bezüglich der Trägerfrequenz des Trägerkanals symmetrisch ist, wobei **dadurch** ein oberes Einzelseitenband, eine Trägerwelle und ein unteres Einzelseitenband gebildet werden,
- Bilden eines ersten in der Amplitude modulierten Einzelseitenbandes aus dem in der Amplitude modulierten Signal **durch** Unterdrücken der Trägerwelle und des oberen Einzelseitenbandes, indem ein erster Abtastwert der Summe hergenommen wird, welche **durch** die Trägerwelle und das obere Einzelseitenband gebildet ist, und Umkehren der Phase des ersten Abtastwertes und Aufsummieren dieses mit dem ursprünglichen in der Amplitude modulierten Signal,
- Bilden eines zweiten in der Amplitude modulierten Einzelseitenbandes aus dem in der Amplitude modulierten Signal **durch** Unterdrücken der Trägerwelle und des unteren Einzelseitenbandes, indem ein zweiter Abtastwert der Summe hergenommen wird, welche **durch** die Trägerwelle und das untere Einzelseitenband gebildet ist, und Umkehren der Phase des zweiten Abtastwertes und Aufsummieren dieses mit dem ursprünglichen in der Amplitude modulierten Signal,
- Modulieren des ersten Einzelseitenbandes **durch** die erste Seitenbandinformation, wobei damit zwei Seitenbänder für das erste Einzelseitenband gebildet werden,
- Modulieren des zweiten Einzelseitenbandes **durch** die zweite Seitenbandinformation, wobei damit zwei Seitenbänder für das zweite Einzelseitenband gebildet werden,
- Kombinieren des in der Frequenz modulierten Signals, des ersten Einzelseitenbandes und des zweiten Einzelseitenbandes in einem Kombinator, so dass alle drei Kanäle gleichzeitig gesendet werden.

2. Verfahren nach Anspruch 1, **dadurch gekennzeichnet, dass** die ersten und die zweiten Einzelseitenbänder in Phase zueinander gesendet werden.

3. Verfahren nach Anspruch 2, **dadurch gekennzeichnet, dass** der Trägerkanal in umgekehrter Phase bezüglich der Einzelseitenbänder gesendet wird.

4. Verfahren nach einem der vorausgehenden Ansprüche 1 - 3, **dadurch gekennzeichnet, dass** ein analoges Signal in dem Trägerkanal gesendet wird, während ein digitales Signal in dem Seitenband gesendet wird.

5. Verfahren nach einem der vorausgehenden Ansprüche 1 - 4, **dadurch gekennzeichnet, dass** die beim Empfang benutzte Trägerwelle entweder das in der Frequenz modulierte Signal, das erste Einzelseitenband oder das zweite Einzelseitenband ist.

6. Verfahren nach einem der vorausgehenden Ansprüche 1 - 5, **dadurch gekennzeichnet, dass** ein Schlüsselcode für den Trägerkanal auf einem Einzelseitenband gesendet wird, wobei der Schlüsselcode gestattet, dass eine verschlüsselte Nachricht entschlüsselt wird.

7. Sendeeinheit zum Senden von Information auf einem Trägerkanal, einem ersten Einzelseitenband und einem zweiten Einzelseitenband in einem Funksystem, wobei das Funksystem eine Kanalsendeeinheit und eine Kanalempfangseinheit aufweist, welche geeignet gemacht wurden, um bei einer Vielzahl von Funkfrequenzen zu funktionieren, **dadurch gekennzeichnet, dass** die Sendeeinheit aufweist: eine Vorrichtung (1) zum Erzeugen einer geeigneten Trägerfrequenz, eine Vorrichtung (2) zum Modulieren der geeigneten Trägerfrequenz durch die Trägerkanalinformation (7) in ein in der Frequenz moduliertes Signal, eine Vorrichtung (3) zum Erzeugen eines in der Amplitude modulierten Signals, wobei die Trägerfrequenz und eine geeignete Taktfrequenz (8) benutzt werden, um ein in der Amplitude moduliertes Signal symmetrisch zu der Trägerfrequenz des Trägerkanals zu erhalten, eine Vorrichtung (3) zum Bilden eines ersten in der Amplitude modulierten Einzelseitenbandes aus dem in der Amplitude modulierten Signal durch Unterdrücken der Trägerwelle und des oberen Einzelseitenbandes, indem ein erster Abtastwert der Summe hergenommen wird, welche durch die Trägerwelle und das obere Einzelseitenband gebildet ist, und Umkehren der Phase des ersten Abtastwertes und Aufsummieren desselben mit dem ursprünglichen in der Amplitude modulierten Signal, eine Vorrichtung (3) zum Bilden eines zweiten in der Amplitude modulierten Einzelseitenbandes aus dem in der Amplitude modulierten Signal durch Unterdrücken der Trägerwelle und des unteren Einzelseitenbandes, indem ein zweiter Abtastwert der Summe hergenommen wird, welche durch die Trägerwelle und das untere Einzelseitenband gebildet ist, und Umkehren der Phase des zweiten Abtastwertes und Aufsummieren desselben mit dem ursprünglichen in der Amplitude modulierten Signal, eine Vorrichtung (4) zum Modulieren des ersten Einzelseitenbandes durch die erste Seitenbandinformation (10), eine Vorrichtung (5) zum Modulieren des zweiten Einzelseitenbandes durch die zweite Seitenbandinformation (9), eine Vorrichtung (6) zum Kombinieren des ersten Einzelseitenbandes, des zweiten Einzelseitenbandes und des in der Frequenz modulierten Signals und das Senden derselben zur gleichen Zeit.

8. Sendeeinheit nach Anspruch 7, **dadurch gekennzeichnet, dass** die Sendeeinheit eine Vorrichtung (6) aufweist, um das erste und das zweite Einzelseitenband in der Phase zu beeinflussen, um sie gleichphasig zu machen.

9. Sendeeinheit nach Anspruch 8, **dadurch gekennzeichnet, dass** die Sendeeinheit eine Vorrichtung (6) aufweist, um die Trägerwelle in der Phase so zu beeinflussen, dass sie in der Phase zu den Einzelseitenbändern umgekehrt gemacht wird.

## Revendications

1. Procédure permettant d'émettre des informations sur un canal d'onde porteuse, sur une première bande latérale unique et sur une deuxième bande latérale unique dans un système radio, ledit système radio comprenant une unité d'émission de canal et une unité de réception de canal, qui ont été adaptées pour fonctionner à une pluralité de fréquences radio, procédure **caractérisée par** les étapes consistant à
- définir la largeur de la bande de fréquence de canal d'onde porteuse,
- définir les largeurs des bandes latérales devant être égales à ou plus petites que la largeur de la bande de fréquence de canal d'onde porteuse,
- émettre sur le canal d'onde porteuse un signal à modulation de fréquence, qui est créé à partir d'une porteuse appropriée à modulation de fréquence par des informations de canal d'onde porteuse,
- générer un signal à modulation d'amplitude utilisant la fréquence porteuse et une fréquence de base appropriée, afin d'obtenir un signal à modulation d'amplitude symétrique par rapport à la fréquence porteuse du canal d'onde porteuse, constituant de ce fait une bande latérale unique supérieure, une onde porteuse et une bande latérale unique inférieure,
- constituer une première bande latérale unique à modulation d'amplitude à partir du signal à modulation d'amplitude en supprimant l'onde porteuse et la bande latérale unique supérieure en prenant un premier échantillon de la somme constituée par l'onde porteuse et la bande latérale unique supérieure et en inversant la phase du premier échantillon et en l'additionnant avec le signal à modulation d'amplitude initial,
- constituer une deuxième bande latérale unique à modulation d'amplitude du signal à modulation d'amplitude en supprimant l'onde porteuse et la bande latérale unique inférieure en prenant un deuxième échantillon de la somme constituée par l'onde porteuse et la bande latérale unique inférieure et en inversant la phase du deuxième échantillon et en l'additionnant avec le signal à modulation d'amplitude initial,
- moduler la première bande latérale unique par des informations de la première bande latérale, et ainsi constituer deux bandes latérales pour la première unique bande latérale,
- moduler la deuxième bande latérale unique par des informations de la deuxième bande latérale, et ainsi constituer deux bandes latérales pour la deuxième bande latérale unique,
- combiner le signal à modulation de fréquence, la première bande latérale unique et la deuxième bande latérale unique dans un combinateur de telle sorte que chacun des trois canaux soit émis simultanément.

2. Procédure définie selon la revendication 1, **caractérisée en ce que** les première et deuxième bandes latérales uniques sont émises en phase l'une avec l'autre.

3. Procédure définie selon la revendication 2, **caractérisée en ce que** le canal d'onde porteuse est émis en opposition de phase relativement aux bandes latérales uniques.

4. Procédure définie selon l'une quelconque des revendications précédentes 1 - 3, **caractérisée en ce qu'**un signal analogique est émis sur le canal d'onde porteuse tandis qu'un signal numérique est émis sur la bande latérale.

5. Procédure définie selon l'une quelconque des revendications précédentes 1-4, **caractérisée en ce que** l'onde porteuse utilisée pour la réception est soit le signal à modulation de fréquence, soit la première bande latérale unique ou soit la deuxième bande latérale unique.

6. Procédure définie selon l'une quelconque des revendications précédentes 1 - 5, **caractérisée en ce qu'**une clé codée pour le canal d'onde porteuse est émise sur une unique bande latérale, ladite clé codée permettant à un message encrypté d'être déchiffré.

7. Unité d'émission permettant d'émettre des informations sur un canal d'onde porteuse, sur une première bande latérale unique et sur une deuxième bande latérale unique dans un système radio, ledit système radio comprenant une unité d'émission de canal et une unité de réception de canal, qui ont été adaptées pour fonctionner à une pluralité de fréquences radio, **caractérisée en ce que** l'unité d'émetteur comprend des moyens (1) pour générer une fréquence porteuse appropriée, des moyens (2) pour moduler la fréquence porteuse appropriée par les informations de canal d'onde porteuse (7) dans un signal à modulation de fréquence, des moyens (3) pour générer un signal à modulation d'amplitude utilisant la fréquence porteuse et une fréquence de base appropriée (8) afin d'obtenir un signal à modulation d'amplitude symétrique par rapport à la fréquence de la porteuse du canal d'onde porteuse, des moyens (3) permettant de former une première bande latérale unique à modulation d'amplitude à partir du signal à modulation d'amplitude en supprimant l'onde porteuse et la bande latérale unique supérieure en prenant un premier échantillon de la somme constituée par l'onde porteuse et la bande latérale unique supérieure et en inversant la phase du premier échantillon et en l'additionnant avec le signal à modulation d'amplitude initial, des moyens (3) permettant de former une deuxième bande latérale unique à modulation d'amplitude du signal à modulation d'amplitude en supprimant l'onde porteuse et la bande latérale unique inférieure en prenant un deuxième échantillon de la somme constituée par l'onde porteuse et la bande latérale unique inférieure et en inversant la phase du deuxième échantillon et en l'additionnant avec le signal à modulation d'amplitude initial, des moyens (4) permettant de moduler la première bande latérale unique par les premières informations latérales de bande (10), des moyens (5) permettant de moduler la deuxième bande latérale unique par les deuxièmes informations latérales de bande (9), des moyens (6) permettant de combiner la première bande latérale unique, la deuxième bande latérale unique et le signal à modulation de fréquence et de les émettre simultanément.

8. Unité d'émission selon la revendication 7, **caractérisée en ce que** l'unité d'émission comprend des moyens (6) permettant de définir la phase des premières et deuxièmes bandes latérales uniques de façon qu'elles soient en phase.

9. Unité d'émission selon la revendication 8, **caractérisée en ce que** l'unité d'émission comprend des moyens (6) permettant de définir la phase de l'onde porteuse afin que les phases des bandes latérales uniques soient en opposition.
